# EUROPEAN PATENT SPECIFICATION

(11) **EP 2 104 422 B1**
(45) Date of publication and mention of the grant of the patent: **05.09.2018**
(21) Application number: 07853586.1
(22) Date of filing: 21.09.2007
(51) Int. Cl.: A01N 25/04, A01N 25/30, A01N 39/04, A01N 43/40, A01N 57/20, A01N 37/22, A01P 13/00

(54) **OSTWALD RIPENING INHIBITION IN CHEMICAL FORMULATIONS**
OSTWALD-REIFUNGSHEMMUNG IN CHEMISCHEN FORMULIERUNGEN
INHIBITION DE LA MATURATION D'OSTWALD DANS DES FORMULATIONS CHIMIQUES

(30) Priority: 22.09.2006 US 826685 P
(43) Date of publication of application: 30.09.2009
(73) Proprietor: Huntsman Petrochemical LLC, The Woodlands, TX 77380 (US)
(72) Inventor: STERN, Alan, J., Magnolia, TX 77354 (US); TANN, R., Scott, Sugar Land, TX 77478 (US); ELSIK, Curtis, M., The Woodlands, TX 77382 (US)
(74) Representative: Van den Broeck, Kristel Alice
(86) International application number: PCT/US2007/079111
(87) International publication number: WO 2008/036864

(56) References cited:
- WO-A1-01/93679
- US-A- 4 102 667
- US-A- 5 100 984
- US-A- 6 030 923
- US-A1- 2005 101 724
- US-A1- 2006 030 486
- US-A1- 2006 100 311

## Description

### BACKGROUND OF THE INVENTION

### Field of the Invention

This invention relates to the field of chemical formulations and more specifically to the field of a stable chemical formulations comprising a slightly water soluble ingredient.

### Background of the Invention

Formulations include ingredients that are typically water insoluble. Therefore, to create a dispersed formulation, the ingredients are conventionally suspended as a solid in water or another liquid. In agricultural applications, ingredients are typically provided in the forms of a suspension concentrate (SC), a wettable powder (WP), or a water dispersible granule (WG). Dispersants are conventionally used to facilitate dispersion of ingredients into a liquid. Conventional dispersants include ethylene oxide/propylene oxide block copolymers, blends of tristyryl phenol (TSP) ethoxylate derivatives in combination with polyvinylpyrrolidone (PVP), PVP/styrene copolymers, and TSP ethoxylates in combination with EO/PO block polymers in suspoemulsion formulations that have actives in both the aqueous and organic phase present. In some instances, distyrylphenyl triglycol ethers have been used to prevent crystal growth of an active ingredient during spray application.

Conventional agricultural formulations are disclosed in WO00/0035284; U.S. Patent Publication No. 2002/0040044; EP 0261492; EP 0391171; U.S. Patent Nos. 6,232,272 and 6,906,004; and "Benefits of a 2,4-D Acid Herbicide Formulation," Journal of ASTM International, March 2005, vol. 2, no. 3, Paper ID JAI126. WO 01/93679 discloses an agrochemical suspension formulation comprising solid particles and a dispersing agent including a water soluble or dispersible styrene(meth) acrylic acid copolymer.

A drawback to conventional formulation technology is that only water insoluble active ingredients may be formulated into aqueous SCs. To overcome this drawback, a technology has been invented to allow the SC formulation of slightly water soluble ingredients. Where possible, such slightly water soluble ingredients have been historically formulated into either a soluble liquid product by making a water-soluble derivative or into an emulsifiable concentrate using a solvent. For example, ingredients such as 2,4-dichlorophenoxyacetic acid have been formulated into either a soluble liquid product by making a water-soluble amine salt or into an emulsifiable concentrate using an oil-soluble ester. Drawbacks to such formulations include the use of solvent, odor problems and/or volatility in the field. A major drawback of formulating a slightly water soluble ingredient as an aqueous SC is Ostwald ripening, which refers to instances in which the larger crystals of the ingredient grow while the smaller crystals dissolve. Physical instability is one manifestation of Ostwald ripening. Further drawbacks to Ostwald ripening include limited utility of the formulation because an acceptable shelf-life may not be obtained. For instance, a two year shelf-life is typically needed for a successful commercial product in agrochemicals. Also, crystals that grow too large may plug spray equipment and may not stay suspended in the spray tank or concentrated formulation.

Consequently, there is a need for an improved chemical formulation. Further needs include an improved dispersant for use in chemical formulations. An additional need includes an improved agricultural aqueous SC formulation that may overcome the Ostwald ripening problems associated with slightly water soluble ingredients.

### BRIEF SUMMARY OF SOME OF THE PREFERRED EMBODIMENTS

These and other needs in the art are addressed in one embodiment by a method for dispersing a slightly water soluble ingredient in an aqueous formulation and more in particular a method of formulating an agricultural formulation comprising: providing a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof and a dispersant being an alternating styrene/methacrylic acid copolymer.

The method includes providing a millbase formulation comprising a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof and a dispersant comprising a water-soluble derivative of an alternating copolymer or a salt thereof being an alternating styrene/methacrylic acid copolymer. The alternating copolymer comprises a residue of a first comonomer and a residue of a second comonomer. The method further includes dispersing the millbase formulation in an aqueous medium to form the final suspension of the slightly water soluble ingredient.

In an embodiment, the slightly water soluble ingredient is a slightly water soluble pesticide. In another embodiment, the slightly water soluble ingredient is a slightly water soluble herbicide. In another embodiment, the slightly water soluble active ingredient is a slightly water soluble insecticide. In other embodiments, adjuvants may be added to the formulation. Some embodiments include controlling pests by spraying the formulation. In some instances, the formulation is diluted with water or oil before being sprayed. In an embodiment, the formulation is sprayed to control unwanted plant growth such as weeds. In another embodiment, the formulation is sprayed to control unwanted insects. In addition, the formulation may be diluted with water or oil before being sprayed.

Hence, according to a first aspect of the present invention is a method of formulating an agricultural formulation comprising: providing a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof and a dispersant being an alternating styrene/methacrylic acid copolymer.

Disclosed is a comonomer may be selected from the group consisting of fumaric acid and anhydride, and the esters, amides and imides derived thereof; maleic acid esters, amides and imides; itaconic acid and anhydride and the corresponding esters, amides and imides derived thereof; acrylic and methacrylic acids and the corresponding esters and amides derived thereof; vinylphosphonic acid and the corresponding esters and amides derived thereof; and ethylene sulphonic acid and the esters and amides derived thereof; acrylamido methyl propyl sulfonate; and combinations thereof.

According to an embodiment, the slightly water soluble ingredient may be an active ingredient used in agricultural formulations.
According to an embodiment, the alternating copolymer may have a molecular weight from about 1,000 Daltons to about 90,000 Daltons.

According to an embodiment, the chemical formulation may comprise more than one dispersant.

Also disclosed is a method of formulating an agricultural formulation is provided, the method comprises providing a slightly water soluble phenoxy herbicide and a dispersant comprising a water soluble, agriculturally acceptable derivative of an alternating copolymer or an agriculturally acceptable salt thereof. The alternating copolymer comprises a residue of a first comonomer and a residue of a second comonomer, and the first comonomer comprising an α,β-unsaturated oxyacid, or an anhydride or other derivative thereof. The second comonomer comprises an olefinic compound containing one or more polymerizable double bonds, or a derivative thereof.

According to an embodiment, the slightly water soluble phenoxy herbicide may be selected from the group consisting of 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; and combinations thereof.

According to an embodiment, the method further may comprise dispersing the agricultural formulation in an aqueous medium to form a diluted suspension of the slightly water soluble phenoxy herbicide.

According to an embodiment, the method further may comprise spraying the agricultural formulation.

According to another aspect of the present invention, a composition is provided, the composition comprises:
a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof; and
a dispersant being an alternating styrene/methacrylic acid copolymer. According to an embodiment, the composition further may comprise at least a second slightly water soluble ingredient.

According to an embodiment, the composition may be used in an application selected from the group consisting of: a dye, a pigment, a pharmaceutical, an ink, a coating, a resin, a fuel, gas treating, a lube, a detergent, and personal care.

According to an embodiment, the composition may comprise from about 1 w/wt.% to about 65 w/wt.% slightly water soluble ingredient.

According to an embodiment, the composition may comprise an aqueous suspension concentrate or suspoemulsion formulation.

According to an embodiment, the composition further may comprise at least a second dispersant.

According to an embodiment, the composition further may comprise a surfactant wetting agent, an adjuvant, a formulation aid, or combinations thereof.

The foregoing has outlined rather broadly the features and technical advantages of the present invention in order that the detailed description of the invention that follows may be better understood.

### BRIEF DESCRIPTION OF THE DRAWINGS

Further objects and advantages of the present invention will be apparent from the following description, reference being had to the accompanying drawings.

In the drawings:
FIGURE 1 is a picture of Example 9, a member of the control group; and
FIGURE 2 is a picture of Example 11, an embodiment of the present invention.

### DETAILED DESCRIPTION OF THE PREFERRED EMBODIMENTS

The formulation comprises a slightly water soluble ingredient and a dispersant. The formulation may be formulated as a suspension concentrate (SC) or a suspoemulsion (SE) formulation. In addition, the formulation may be suitable for any use. For instance, the formulation may be an agricultural formulation.

The ingredient(s) may be a solid that is slightly water soluble. It is to be understood that slightly water soluble refers to a 100 ppm to 10,000 ppm solubility in water. The slightly water soluble ingredient may include any slightly water soluble or slightly water dispersible pesticide or any slightly water soluble or slightly water dispersible non-agrochemical. In agricultural applications, the ingredient may be referred to as an active ingredient. Any pesticide suitable for agricultural applications may be used. Without limitation, examples of pesticides include herbicides, insecticides, fungicides, biocides, molluscicides, algaecides, plant growth regulators, anthelmintics, rodenticides, nematocides, acaricides, amoebicides, protozoacides, or combinations thereof. Without limitation, further examples of such pesticides include triazine herbicides such as simazine, atrazine, terbuthylazine, terbutryn, prometryn and ametryn; urea herbicides such as diuron and fluometuron; sulfonylurea herbicides such as chlorsulfuron, metsulfuron methyl, nicosulfuron and triasulfuron; sulphonanilide herbicides such as flumetsulam; organophosphate insecticides such as azinphos methyl, chlorpyrifos, sulprofos and azamethiphos; carbamate insecticides such as aldicarb, bendiocarb, carbaryl and fenobucarb; fungicides such as dimethomorph, benomyl, carbendazim, and mancozeb; and acaricides such as propargite. Lists of pesticides are disclosed in the Crop Protection Dictionary (contained in the Meisterpro Crop Protection Handbook) and the British Crop Protection Council: The Pesticides Manual).

In one embodiment, the ingredient is a slightly water soluble phenoxy herbicide. A phenoxy herbicide refers to members of a family of chemicals related to the growth hormone indoleacetic acid. The starting solid phenoxy herbicide may be in the form of granules, powders, or any other suitable form. The slightly water soluble phenoxy herbicide is 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof. In one embodiment, the slightly water soluble phenoxy herbicide is 2,4-dichlorophenoxyacetic acid. In other embodiments, other active ingredients may be mixed with the phenoxy herbicides. It is to be understood that an active ingredient may include any chemical substance having pesticidal properties. Any active ingredients suitable for use with phenoxy herbicides may be used. Without limitation, examples of suitable active ingredients include dicamba, pyraflufin, bromoxynil, ioxynil, triazines, glyphosate, pyridines (e.g., clopyralid, triclopyr, fluroxypyr, and picloram), sulfonylureas (thifensulfuron, tribenuron, chlorimuron, and metsulfuron), and prodiamine. In other embodiments, the ingredient is picloram acid, propanil, clopyralid, glyphosate, or combinations thereof.

Examples of non-agrochemical applications for the present invention include dyes, pigments, pharmaceuticals, inks, coatings, resins, fuels, gas treating, lubes, detergents, and personal care.

The formulation may contain any amount of the slightly water soluble ingredient suitable for a desired application. In an embodiment, the aqueous formulation contains from about 1 w/wt.% to about 65 w/wt.% of the slightly water soluble ingredient, alternatively from about 5 w/wt.% to about 55 w/wt.%. In other embodiments of the present invention, the formulation may contain more than one slightly water soluble active ingredients.

The dispersant comprises a water soluble derivative of an alternating copolymer or salt thereof. For the purposes of this disclosure, a water dispersible derivative of an alternating copolymer shall be considered a water soluble, derivative of an alternating copolymer. In some embodiments, the dispersant comprises a water soluble agriculturally acceptable derivative of an alternating copolymer or an agriculturally acceptable salt thereof. The term "agriculturally acceptable" covers all materials that may be used in agricultural formulation technology. In an embodiment, the alternating copolymer comprises at least one residue of a first comonomer and at least one residue of a second comonomer. The alternating character may be any suitable character for use in agricultural uses. In an embodiment, the alternating copolymer has an alternating character with greater than about 70% of consecutive comonomer residue units being alternate between residues of the first comonomer and the second comonomer, alternatively greater than about 90% of consecutive comonomer residue units being alternate between residues of the first comonomer and the second comonomer. In some embodiments, the dispersant is a styrene/methacrylic acid copolymer. In embodiments, the dispersant (e.g., styrene/methacrylic acid) facilitates an odorless formulation that reduces volatility of the ingredient. In addition, the dispersant (e.g., styrene/methacrylic acid) may allow commercial formulation without further chemical derivation. In alternative embodiments, the dispersant may also contain other comonomer residues such as copolymers of three or more comonomers (e.g., including the first and second comonomers). Dispersants are disclosed in U.S. Patent No. 6,844,293; U.S. Patent No. 6,855,763; U.S. Patent Application Publication No. 2005/0090603; U.S. Patent Application Publication No. 2005/0101724; U.S. Patent Application Publication No. 2002/0099131; EP 1168916; and WO99/18788.

The first comonomer may be an α,β-unsaturated oxyacid, an anhydride or other derivative thereof. Without limitation, examples of suitable first comonomers include fumaric acid, maleic acid and anhydrides, and the esters, amides and imides derived thereof; itaconic acid and anhydride and the corresponding esters amides and imides derived thereof; acrylic and methacrylic acids and the corresponding esters and amides derived thereof; vinylphosphonic acid and the corresponding esters and amides derived thereof; ethylene sulphonic acid and the esters and amides derived thereof; acrylamido methyl propyl sulfonate; or combinations thereof.

The second comonomer may be an olefinic compound containing one or more polymerizable double bonds or a derivative thereof. Without limitation, examples of second comonomers include styrene and alkyl and halo derivatives thereof; vinyl ethers and esters; α-olefins, internal olefins, cyclic olefins, (either exocyclic or endocyclic); allylic alcohols and their corresponding ester derivatives; allylic ethers; allylic halo compounds; allylic aryl compounds; vinyl amides; vinyl chloride; vinylidene chloride; or combinations thereof.

The dispersants are salts or water-soluble or water dispersible derivatives of the alternating copolymer. In an embodiment, the dispersants are agriculturally acceptable salts or water-soluble agriculturally acceptable derivatives of the alternating copolymer. The dispersants are soluble or dispersible in water. In an embodiment, suitable salts include those obtained by reacting groups pendant to the copolymer (e.g., acids and acid derivatives or anhydrides and esters) with basic reagents (e.g., alkali and alkaline earth metal hydroxides, oxides, carbonates and alkoxides; and basic nitrogen, sulphur and phosphorous compounds such as ammonia, amines, sulfates and phosphates).

In an embodiment, the alternating copolymer has a molecular weight from 1,000 Daltons to 90,000 Daltons, alternatively from 1,000 Daltons to 30,000 Daltons, and alternatively from 1,000 Daltons to 10,000 Daltons.

The formulation may contain any amount of the dispersant suitable for dispersing the desired slightly water soluble active ingredient. In an embodiment, the formulation contains from about 0.5 w/wt.% to about 6.0 w/wt.% dispersant, alternatively from about 0.5 w/wt.% to about 2.0 w/wt.% dispersant, and alternatively about 2.0 w/wt.% dispersant. In other embodiments of the present invention, the formulation may contain more than one dispersant. A second dispersant may be referred to as a co-dispersant.

Without limitation, some commercial examples of suitable dispersants are TERSPERSE® 2700 dispersant, TERSPERSE® 2735 dispersant TERSPERSE® 2425 dispersant, TERSPERSE® 2200 dispersant and SMA-1000 MA resin. TERSPERSE® 2700 dispersant is a styrene/methacrylic acid copolymer that is commercially available from Huntsman Corporation of The Woodlands, TX. TERSPERSE® 2735 dispersant is a styrene/methacrylic acid copolymer that is commercially available from Huntsman Corporation of The Woodlands, TX. TERSPERSE® 2425 dispersant is an alkyl naphthalene sulfonate formaldehyde condensate polymer that is commercially available from Huntsman Corporation of The Woodlands, TX. TERSPERSE® 2200 dispersant is an aryl phenol ethoxy phosphate ester, acid copolymer that is commercially available from Huntsman Corporation of The Woodlands, TX. SMA-1000 MA resin is a styrene maleic anhydride amic acid copolymer that is commercially available from the Sartomer Company, Inc. of Exton, PA.

In an embodiment, the millbase formulation is dispersed in an aqueous medium by any suitable means. For instance, the formulation may be dispersed by stirring, mixing, blending, and the like. Embodiments of the present invention may be dispersed in an oil-based medium.

In an alternative embodiment, the formulation may also include a surfactant wetting agent. Any suitable surfactant wetting agent may be used that is suitable for an agrochemical application. Without limitation, examples of surfactant wetting agents include an alkylpolysaccharide, a mono- or di-alkyl sulphosuccinate derivative, a nonionic alcohol alkoxylate surfactant, and an anionic surfactant such as an alkylbenzene sulfonate. The aqueous formulation may contain any amount of the surfactant wetting agent suitable for facilitating dilution. In an embodiment, the aqueous formulation contains from about 0.5 w/wt.% to about 2.5 w/wt.% of the surfactant wetting agent.

In an alternative embodiment, the formulation contains an adjuvant. It is to be understood that an adjuvant refers to a subsidiary additive in a mixture that contributes to the effectiveness of the primary ingredient. In an embodiment, the adjuvant is an oil-based adjuvant. Any oil-based adjuvant suitable for use in agrochemical applications may be used. Without limitation, examples of suitable oil-based adjuvants include crop oils, crop oil concentrates, vegetable oils, modified vegetable oils, or combinations thereof. The formulation may contain any amount of the oil-based adjuvant suitable for a desired use. In some embodiments, the oil-based adjuvant facilitates efficacy of the slightly water soluble active ingredient. In an embodiment, the formulation contains from about 1.0 w/wt.% to about 15.0 w/wt.% of adjuvant. Other examples of adjuvants (e.g., non oil-based) include surfactant adjuvants, silicon-based adjuvants, sticker adjuvants, extender adjuvants, plant penetrant surfactants, compatibility agent adjuvants, mineral control adjuvants, drift retardant adjuvants, defoaming agent adjuvants, thickener adjuvants, solvent adjuvants, and fertilizer-based adjuvants. Without limitation, examples of surfactant adjuvants include anionic, cationic, and nonionic surfactants. In an embodiment, the surfactant adjuvant is a nonionic surfactant. In addition, without limitation, examples of silicon-based adjuvants include polyether-silicon (e.g., soluble in water) and alkyl-silicon (e.g., soluble in oil). Moreover, fertilizer-based adjuvants include nitrogen-based liquid fertilizers such as ammonium sulfate and ammonium sulfonate.

In other alternative embodiments, the formulation may also contain formulation aids. Without limitation, examples of suitable formulation aids include antifreeze, dyes, thickening agents, preservatives, anti-foaming agents, ultraviolet stabilizers, and pH adjusting agents. The formulation may contain any amount of the formulation aids suitable for a desired application. In an embodiment, the formulation may contain from about 0.1 w/wt.% to about 10.0 w/wt.% of the formulation aids.

An unexpected result of the formulation comprising the dispersant with a slightly water soluble ingredient is that the formulation is stable. Moreover, Ostwald ripening is reduced or completely eliminated. In some embodiments, the formulation may be stored at room temperature for one year or more with no observed crystal growth. A further unexpected result is that embodiments do not include an acidifying agent. In alternative embodiments, an acidifying agent may be included in the formulation.

It is to be understood that the technology may be effective both during spray application as well as in a concentrated product. The invention herein may provide more favorable herbicide properties than previous formulations.

To further illustrate various illustrative embodiments of the present invention, the following examples are provided.

### EXAMPLES

Examples 1-4 in Table 1 show SC formulations that display no Ostwald ripening.

**Table 1**

| **Components** | **Example 1** | **Example 2** | **Example 3** | **Example 4** |
|---|---|---|---|---|
| 2,4-D Acid Tech | 40.7 | 40.7 | 48.4 | 48.4 |
| NANSA® HS90/S Wetter | 0.9 | 0.9 | 1.1 | 1.1 |
| TERSPERSE® 2700 Dispersant | 1.1 | 1.1 | 1.3 | 1.3 |
| Ethylene Glycol | 4.4 | 4.4 | 5.2 | 5.2 |
| Xanthan Gum Thickener | 0.2 | 0.2 | 0.1 | 0.1 |
| PROXEL® GXL preservative | 0.2 | 0.2 | 0.1 | 0.1 |
| EXXSOL® D-130 Oil | - | 6.0 | - | 6.0 |
| Water | 52.5 | 46.5 | 43.8 | 37.8 |
| TOTAL | 100.0 | 100.0 | 100.0 | 100.0 |
| Ostwald ripening after 45 days: | No | No | No | No |

NANSA® HS90/S surfactant is a wetting agent commercially available from Huntsman Corporation. EXXSOL® D-130 is an oil-based adjuvant commercially available from ExxonMobil Corporation. PROXEL® GXL preservative is commercially available from Avecia Biologics Limited of Billingham, UK. The SCs in the Examples 1-4 were prepared by milling a slurry that was 55.0 w/wt.% active ingredient and 36.4 w/wt.% water with the wetter, dispersant and glycol. This slurry was passed through a media mill. After particle size reduction, the millbase was let down with the thickener and preservative and water to the target loading of the final SC formulation.

The following experiments (Examples 5-9 in Table 2) were done to demonstrate that many common dispersants fail to prevent Ostwald ripening of herbicides in SC formulations.

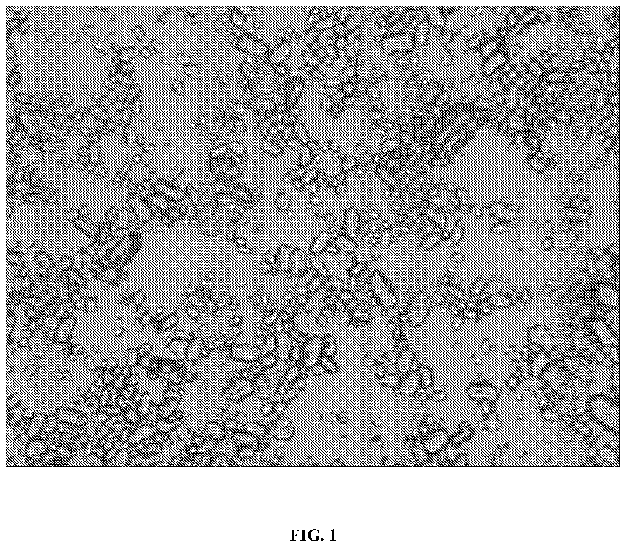

The following five formulations (Examples 5-9, Table 2) containing a herbicide, 2,4-dichlorophenoxyacetic acid (2,4-D acid) were prepared using structurally diverse commercial dispersants. The preparation of one formulation (Example 5) was attempted in which the dispersant was intentionally omitted. Table 2 shows the composition of the five formulations. Each formulation was checked by optical microscope for signs of crystal growth after 45 days of room temperature storage. The samples are designated 8470-7A, 8470-7B, 8470-7C, 8470-7D, 8470-7E. All amounts are given in grams. The samples were prepared by combining the water, glycol, wetting agent, and dispersant followed by stirring to form a solution. To this solution the active ingredient, 2,4-D acid herbicide was added, forming a slurry. The slurry was pre-milled with a high shear mixer to break up any large lumps of 2,4-D acid herbicide, then milled with an Eiger Mini-100 media mill to a final median particle size of about three microns. 1.0 mm glass media was used in the Eiger mill. As indicated in the table below, three formulations of 2,4-D acid herbicide, made with conventional commercial dispersants were observed to undergo readily crystal growth (i.e. Ostwald ripening) during storage at ambient laboratory temperatures. The crystal growth was readily evident when samples were observed by optical microscope. Figure 1 shows the crystal growth for Example 9. TERSPERSE® dispersants and SURFONIC® surfactants are commercially available from the Huntsman Corporation in The Woodlands, Texas.

**Table 2**

| | **Ex. 5** | **Ex. 6** | **Ex. 7** | **Ex. 8** | **Ex. 9** | |
|---|---|---|---|---|---|---|
| Formulation component | 8470-7A | 8470-7B | 8470-7C | 8470-7D | 8470-7E | Function |
| | | | | | | |
| 2,4-D acid, technical | 165 | 165 | 165 | 165 | 165 | active ingredient |
| Deionized water | 113.7 | 104.7 | 104.7 | 104.7 | 104.7 | diluent |
| sodium dodecylbenzene sulfonate | 3.6 | 3.6 | 3.6 | 3.6 | 3.6 | wetting agent |
| ethylene glycol | 17.7 | 17.7 | 17.7 | 17.7 | 17.7 | antifreeze agent |
| TERSPERSE® 2425 dispersant | 0 | 9 | 0 | 0 | 0 | dispersant |
| TERSPERSE® 2500 dispersant | 0 | 0 | 9 | 0 | 0 | dispersant |
| TERSPERSE® 2200 dispersant | 0 | 0 | 0 | 9 | 0 | dispersant |
| SURFONIC® POA P104 surfactant | 0 | 0 | 0 | 0 | 9 | dispersant |
| | | | | | | |
| Ostwald ripening after 45 days: | no data | Slight | Yes | Yes | Yes | |
| Observations | Formulation was unprocessable | Resulted in high viscosity | Good viscosity | Good viscosity | Good viscosity | |

The following Examples 10 and 11 describes alternative polymeric dispersants (alternative to TERSPSERSE® 2700 dispersants) that are equally effective at preventing Ostwald ripening with 2,4-D acid herbicides. First is the synthesis of the polymeric dispersant, followed by the preparation of a 2,4-D suspension concentrate.

Synthesis of polymeric dispersant 8590-4A. To a solution of AMPS (2-acrylamido-2-methylpropanesulfonic Acid), 35 grams, styrene, 15 grams, isopropanol, 75 grams, and water, 15 grams, warmed to 70 °C under a slow nitrogen stream and stirred, was added a 25% solution of sodium persulfate in water, 10 grams, over a 5 hour period. The reaction mixture was cooled, and the isopropanol and water was removed under reduced pressure. The residual white, crunchy solid was dissolved in water, 100 grams, and carefully neutralized with saturated sodium carbonate solution, 39 grams, to pH 7. The result was a tan liquid, approximately 35% solids by wt.

Example 10: Preparation of phenoxy acid SC, 8590-5B. First, a solution of polymeric dispersant 8590-4A, 12 grams, sodium alkylbenzene sulfonate, 3.75 grams, propylene glycol, 15 grams, and water, 119.25 grams was prepared. To this solution was added 2,4-D acid, 150 grams. This slurry was milled for 6 minutes at 2500 rpm to give a final median particle size of about four microns using an Eiger mini-100 media mill will 1.0 mm glass media. To 250 grams of this suspension was added 28 grams of a stabilizer premix prepared from one part Xanthan gum, one part PROXEL® GXL preservative, and 98 parts water. The sample was stored at room temperature for 57 days, then observed by optical microscopy for signs of Ostwald ripening, but no crystal growth was found.

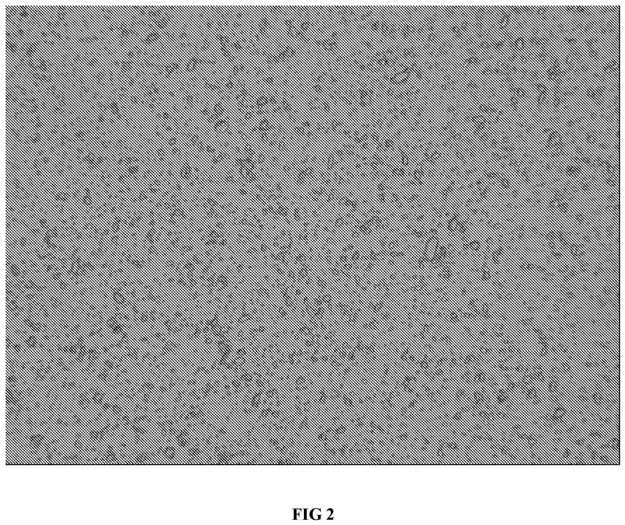

Example 11: Further example of the use of an alternating copolymer to prepare a phenoxy acid SC. To a solution made from sodium alkylbenzene sulfonate, 3 grams, propylene glycol, 12 grams, water, 105 grams, and SMA® 1000 MA resin, 15 grams (available from Sartomer Company, Warrington, PA, 18976), was added 2,4-D acid, 165 grams. This coarse slurry was wet milled using an Eiger mini-100 media mill, running at 2000 rpm for 12 minutes, using 1.0 mm glass media. The result was a thin white suspension, 250 grams, to which 28 grams of a Xanthan gum/PROXEL® GXL preservative premix was added to reduce the rate of settling. After 15 months of room temperature storage, no sign of Ostwald ripening was evident, when a sample was observed by optical microscope (see Figure 2). Figure 2 should be viewed in comparison with Figure 1, which is the formulation of Example 9. Both Figure 1 and Figure 2 are optical microscope photos taken at a magnification of 200X. Figure 2 shows the solid active ingredients still amorphous in shape and widely dispersed through the mixture. Figure 1 shows the effects of Ostwald ripening on the solid active ingredients. In Figure 1 the active ingredients have formed large crystals in the mixture. These larger crystals decrease the efficacy of the formulation and create application problems such as settling in the tank and clogging the spray systems.

Examples 12, 13, and 14 are formulation examples of a phenoxy acid in combination with a second active in a suspension concentrate. Example 12 demonstrates a 2,4-D plus clopyralid SC with the ingredients of Table 3. Clopyralid is 3,6-dichloropicolinic acid. Bentonite clay is sold under the tradename Volclay HPM-20 and is commercially available from the American Colloid Company of Arlington Heights, IL.

**Table 3: Part A: Millbase preparation for Example 12**

| Component | Percent w/wt.% | Grams | Function |
|---|---|---|---|
| 2,4-D, technical | 35.8 | 179.2 | active |
| clopyralid, technical | 6.91 | 34.5 | active |
| TERSPERSE® 2735 dispersant | 3.9 | 19.5 | dispersant for 2,4-D |
| TERSPERSE® 2425 dispersant | 0.91 | 4.6 | co-dispersant for clopyralid |
| ethylene glycol | 7.84 | 39.2 | antifreeze agent |
| Volclay HPM-20, 10% slurry premix | 13 | 65.1 | suspension stabilizer |
| sodium alkylbenzene sulfonate | 1.56 | 7.8 | wetting agent |
| Water | 30 | 150 | diluent |

Process: The above components were blended together, then milled for eight minutes at 2500 rpm in an Eiger mini-100 media mill using 1.0 mm glass media. Yield: 404 grams.

Part B: Addition of Xanthan stabilizer to millbase. Using a medium shear mixer, the millbase of part A was carefully blended with a solution of hydrated Xanthan gum, preservative, and water, as indicated in the table below.

**Table 4: Part B: Addition of Xanthan stabilizer to millbase.**

| Component | Percent w/wt.% | Grams |
|---|---|---|
| Millbase | 61.4 | 404 |
| Water | 38.26 | 252 |
| Xanthan qum | 0.17 | 1.12 |
| PROXEL® GXL preservative | 0.17 | 1.12 |

Example 13 shows a 2,4-D + glyphosate acid suspension concentrate. The ingredients of Example 13 are in Table 5.

**Table 5: Part A: Millbase preparation for Example 13**

| Millbase 8511-71A | | | |
|---|---|---|---|
| Component | Percent w/wt.% | Grams | Function |
| Glyphosate acid, technical | 19 | 57 | active |
| 2,4-D acid, technical | 31 | 93 | active |
| TERSPERSE® 2735 dispersant | 4 | 12 | dispersant |
| TERSPERSE® 2425 dispersant | 1 | 3 | co-dispersant |
| Sodium alkylbenzenesulfonate | 1.2 | 3.6 | wetting agent |
| Volclay HPM-20 slurry premix | 0.2 | 0.6 | suspension aid |
| Ethylene glycol | 4 | 12 | antifreeze |
| Water | 39.6 | 118.8 | diluent |

The above components were blended together, then milled for five minutes at 2500 rpm in an Eiger mini-100 media mill using 1.0 mm glass media.

Ninety-three (93) parts (250 grams) of millbase 8511-71A was added 7 parts (18.8 grams) of 1% Xanthan Stabilizer of Table 4, then mixed thoroughly.

Example 14 shows a 2,4-D acid + propanil suspension concentrate. The ingredients of Example 14 are in Table 6.

**Table 6: Part A: Millbase preparation for Example 14**

| Millbase 8590-28A | | | |
|---|---|---|---|
| Component | Percent w/wt.% | Grams | Function |
| Propanil, technical | 20 | 60 | active |
| 2,4-D acid technical | 30 | 90 | active |
| TERSPERSE® 2735 dispersant | 3 | 9 | dispersant |
| TERSPERSE® 2200 dispersant | 0.7 | 2.1 | co-dispersant |
| sodium alkylbenzene sulfonate | 1 | 3 | wetting agent |
| Propylene glycol | 6 | 18 | antifreeze agent |
| Water | 39.3 | 117.9 | diluent |

The above components were blended together, then milled for six minutes at 2500 rpm in an Eiger mini-100 media mill using 1.0 mm glass media. Yield of millbase was 250 grams.

To the millbase above was added a 1.66% solution of hydrated Xanthan Stabilizer of Table 4, 20 grams, water, 8 grams, and PROXEL® GXL preservative, 0.04 grams, then mixed thoroughly.

Results of storage tests of Examples 12-14 above. No crystal growth could be observed by optical microscope in any of the formulations that have more than one active ingredient (Examples 12-14) above after 8 weeks of ambient-temperature storage, demonstrating the effectiveness of the invention at controlling Ostwald ripening.

Example 15 uses picloram acid as an active ingredient instead of a phenoxy herbicide. A solution of water, 147 grams, ethylene glycol, 21 grams, sodium alkylbenezene sulfonate, 3 grams, and SMA® 1000 MA resin, 9 grams, was prepared. To this solution, picloram technical, 120 grams, was added, and the picloram was dispersed using a high shear Silverson rotor-stator homogenizer. This slurry was milled to a final median particle size of 4 microns using an Eiger mini-100 mill, running at 2500 rpm for 6 minutes, and using 1.0 mm glass media. The thin, milk white product was diluted with 29.9 grams of a 1.66% Xanthan gum solution in water, giving a final picloram acid concentration of 36% by weight. The sample was observed by optical microscope after 45 days of storage and no evidence of Ostwald ripening was seen.

## Claims

1. A method of formulating an agricultural formulation comprising:
providing a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof and a dispersant being an alternating styrene/methacrylic acid copolymer.

2. The method of claim 1, wherein the alternating copolymer has a molecular weight from 1,000 Daltons to 90,000 Daltons.

3. The method of claim 1, wherein the agrochemical formulation comprises more than one dispersant.

4. The method of claim 1, further comprising dispersing the agricultural formulation in an aqueous medium to form a diluted suspension of the slightly water soluble phenoxy herbicide.

5. The method of claim 1, further comprising spraying the agricultural formulation.

6. An agrochemical composition comprising:
a slightly water soluble ingredient being 2,4-dichlorophenoxyacetic acid; 2,4-dichlorophenoxy propionic acid; 2,4-dichlorophenoxy butyric acid; 2,4,5-trichlorophenoxyacetic acid; 2-methyl-4-chlorophenoxyacetic acid; 2-methyl-4-chlorophenoxy propionic acid; 2-methyl-4-chlorophenoxy butyric acid; or combinations thereof; and
a dispersant being an alternating styrene/methacrylic acid copolymer.

7. The composition of claim 6, wherein the composition comprises from 1 w/wt.% to 65 w/wt.% slightly water soluble ingredient.

8. The composition of claim 6, wherein the composition comprises an aqueous suspension concentrate or suspoemulsion formulation.

## Patentansprüche

1. Verfahren zum Formulieren einer landwirtschaftlichen Formulierung, umfassend:
Bereitstellen eines schwach wasserlöslichen Bestandteils, der 2,4-Dichlorphenoxyessigsäure; 2,4-Dichlorphenoxypropionsäure;
2,4-Dichlorphenoxybuttersäure; 2,4,5-Trichlorphenoxyessigsäure;
2-Methyl-4-chlorphenoxyessigsäure; 2-Methyl-4-chlorphenoxypropionsäure;
2-Methyl-4-chlorphenoxybuttersäure; oder Kombinationen davon ist, und
eines Dispergiermittels, das ein alternierendes Styrol/Methacrylsäure-Copolymer ist.

2. Verfahren nach Anspruch 1, wobei das alternierende Copolymer ein Molekulargewicht von 1.000 Dalton bis 90.000 Dalton aufweist.

3. Verfahren nach Anspruch 1, wobei die landwirtschaftliche Formulierung mehr als ein Dispergiermittel umfasst.

4. Verfahren nach Anspruch 1, ferner umfassend das Dispergieren der landwirtschaftlichen Formulierung in einem wässrigen Medium zur Bildung einer verdünnten Suspension des schwach wasserlöslichen Phenoxyherbizids.

5. Verfahren nach Anspruch 1, ferner umfassend das Sprühen der landwirtschaftlichen Formulierung.

6. Landwirtschaftliche Zusammensetzung, umfassend:
einen schwach wasserlöslichen Bestandteil, der
2,4-Dichlorphenoxyessigsäure; 2,4-Dichlorphenoxypropionsäure;
2,4-Dichlorphenoxybuttersäure; 2,4,5-Trichlorphenoxyessigsäure;
2-Methyl-4-chlorphenoxyessigsäure; 2-Methyl-4-chlorphenoxypropionsäure;
2-Methyl-4-chlorphenoxybuttersäure; oder Kombinationen davon ist, und
ein Dispergiermittel, das ein alternierendes Styrol/Methacrylsäure-Copolymer ist.

7. Zusammensetzung nach Anspruch 6, wobei die Zusammensetzung 1 Gew./Gew.-% bis 65 Gew./Gew.-% schwach wasserlöslichen Bestandteil umfasst.

8. Zusammensetzung nach Anspruch 6, wobei die Zusammensetzung ein/e wässrige/s Suspensionskonzentrat oder Suspoemulsionsformulierung umfasst.

## Revendications

1. Procédé de formulation d'une formulation agricole comprenant :
la fourniture d'un ingrédient légèrement hydrosoluble qui est l'acide 2,4-dichlorophénoxyacétique ; l'acide 2,4-dichlorophénoxypropionigue ; l'acide 2,4-dichlorophénoxybutyrique ; l'acide 2,4,5-trichlorophénoxyacétique ; l'acide 2-méthyl-4-chlorophénoxyacétique ; l'acide 2-méthyl-4-chloro-phénoxypropionique ; l'acide 2-méthyl-4-chloro-phénoxy-butyrique ; ou leurs combinaisons et un agent dispersant qui est un copolymère styrène/acide méthacrylique alterné.

2. Procédé selon la revendication 1, dans lequel le copolymère alterné a un poids moléculaire de 1 000 à 90 000 daltons.

3. Procédé selon la revendication 1, dans lequel la formulation agrochimique comprend plus d'un agent dispersant.

4. Procédé selon la revendication 1, comprenant en outre la dispersion de la formulation agricole dans un milieu aqueux pour former une suspension diluée de l'herbicide phénoxy légèrement hydrosoluble.

5. Procédé selon la revendication 1, comprenant en outre la pulvérisation de la formulation agricole.

6. Composition agrochimique comprenant :
un ingrédient légèrement hydrosoluble qui est l'acide 2,4-dichlorophénoxyacétique ; l'acide 2,4-dichlorophénoxy-propionique ; l'acide 2,4-dichlorophénoxybutyrique ; l'acide 2,4,5-trichlorophénoxyacétique ; l'acide 2-méthyl-4-chloro-phénoxyacétique ; l'acide 2-méthyl-4-chlorophénoxypropionique ; l'acide 2-méthyl-4-chlorophénoxybutyrique ; ou leurs combinaisons ; et
un agent dispersant qui est un copolymère styrène/acide méthacrylique alterné.

7. Composition selon la revendication 6, la composition comprenant de 1 % en poids/poids à 65 % en poids/poids de l'ingrédient légèrement hydrosoluble.

8. Composition selon la revendication 6, la composition comprenant un concentré de suspension aqueuse ou une formulation de suspo-émulsion.
